# EUROPÄISCHE PATENTSCHRIFT

(11) **EP 2 004 414 B1**
(45) Veröffentlichungstag und Bekanntmachung des Hinweises auf die Patenterteilung: **09.12.2009**
(21) Anmeldenummer: 07723504.2
(22) Anmeldetag: 22.03.2007
(51) Int. Cl.: B41M 1/10, C09D 11/00, B42D 15/00

(54) **SICHERHEITSELEMENT**
SECURITY ELEMENT
ÉLÉMENT DE SÉCURITÉ

(30) Priorität: 04.04.2006 DE 102006016118
(43) Veröffentlichungstag der Anmeldung: 24.12.2008
(73) Patentinhaber: Giesecke & Devrient GmbH, 81677 München (DE)
(72) Erfinder: MENGEL, Christioph, 83607 Holzkirchen (DE); LANGER, Jörg, 85301 Schweitenkirchen (DE); WÖRLEIN, Edith, 81539 München (DE)
(74) Vertreter: Zeuner & Summerer
(86) Internationale Anmeldenummer: PCT/EP2007/002550
(87) Internationale Veröffentlichungsnummer: WO 2007/115662

(56) Entgegenhaltungen:
- US-A- 4 028 118
- US-A1- 2004 077 743

## Beschreibung

Die Erfindung betrifft eine thermochrome Druckfarbe für den Stichtiefdruck, einen Datenträger mit einem im Stichtiefdruckverfahren und unter Verwendung dieser Druckfarbe erzeugten Druckbild und ein Verfahren zur Herstellung einer derartigen Druckfarbe und eines derartigen Datenträgers.

Es ist bereits seit langem bekannt, thermochrome Materialien zur Absicherung von Wertdokumenten zu verwenden. So beschreibt beispielsweise die EP 0 827 457 B1 einen Datenträger mit einer im Sieb-, Flexo- oder Rastertiefdruckverfahren aufgedruckten Untergrundschicht, die thermochrome Stoffe enthalten kann. Thermochrome Stoffe im Stichtiefdruckverfahren zu verdrucken, ist hieraus nicht bekannt.

Die Druckschrift US 4 028118 offenbart eine thermochrome reversible Druckfarbe geeignet für den Stichtiefdruck, die eine mikroverkapselte Vierkomponenten-Mischung aus (A) einem Leukofarbstoff, (B) einem Elektronenakzeptor, (C) einem Alkohol und (D) einem Ester enthält. Auch aus der Druckschrift US 2004/ 0077743 A1 ist eine thermochrome reversible Druckfarbe mit einer mikroverkapselten Vierkomponenten-Mischung bekannt.

Der Erfindung liegt daher die Aufgabe zugrunde, eine thermochrome Druckfarbe für den Stichtiefdruck bereitzustellen und einen Datenträger mit einem im Stichtiefdruckverfahren und unter Verwendung dieser Druckfarbe erzeugten Druckbild zu schaffen.

Weiterhin ist es Aufgabe der Erfindung, Verfahren zur Herstellung einer derartigen Druckfarbe und eines derartigen Datenträgers bereitzustellen.

Diese Aufgaben werden durch die Merkmale der unabhängigen Ansprüche gelöst. Weiterbildungen sind Gegenstand der Unteransprüche.

Bei einem Datenträger im Sinne der Erfindung kann es sich um jeden zu schützen beabsichtigten Gegenstand, wie beispielsweise Markenartikel oder Wertdokumente, handeln. Datenträger im Sinne der vorliegenden Erfindung sind insbesondere Banknoten, aber auch Aktien, Urkunden, Briefmarken, Schecks, Scheckkarten, Kreditkarten, Ausweise, Pässe, Eintrittskarten, Fahrkarten, Flugscheine und Ähnliches sowie Etiketten, Siegel, Verpackungen oder andere Elemente für die Produktsicherung. Die vereinfachende Benennung "Datenträger" schließt deshalb im Folgenden stets Dokumente der genannten Art ein.

Die Erfindung betrifft eine thermochrome Druckfarbe für den Stichtiefdruck mit den Merkmalen von Anspruch 1.

Bei dem Elektronendonor handelt es sich bevorzugt um einen elektronenreichen organischen Farbstoff, besonders bevorzugt um einen Leukofarbstoff. Als Leukofarbstoffe werden insbesondere Spirolactone, Fluorane, Spiropyrane oder Fulgide eingesetzt.

Als Elektronenakzeptor wird vorzugsweise eine schwache Säure eingesetzt. Beispielsweise eignen sich Bisphenol A, Alkyl-p-hydroxybenzoat, 1,2,3-Triazol oder 4-Hydroxycoumarin.

Als Lösungsmittel wird bevorzugt ein polares Lösungsmittel eingesetzt. Beispielsweise eignen sich Alkohole, Ketone, Ester oder Ether.

Die drei Komponenten - Elektronenakzeptor, Elektronendonor und Lösungsmittel - sind gemeinsam mikroverkapselt, vorzugsweise mit Gelatine.

Je nach gewünschtem Farbeffekt können geeignete Komponenten kombiniert werden.

Unter "thermochrom" wird der Effekt verstanden, dass sich die Farbe eines betrachteten Materials, in diesem Fall der Druckfarbe oder des Druckbildes, reversibel unter Temperatureinfluss bei einer bestimmten Umschlagstemperatur ändert. Der Farbumschlag kann dabei von farbig nach farblos, von farblos nach farbig und von einer Farbe in eine andere Farbe erfolgen.

Die mikroverkapselte Dreikomponenten-Mischung ist bevorzugt so abgestimmt, dass sie unterhalb der Umschlagstemperatur farbig, vorzugsweise schwarz, ist und oberhalb dieser Temperatur farblos. Bei bestimmten Anwendungen kann es sinnvoll sein, eine Dreikomponenten-Mischung zu verwenden, die unterhalb der Umschlagstemperatur farblos und oberhalb dieser Temperatur farbig, vorzugsweise schwarz ist. Die Umschlagstemperatur der mikroverkapselte Dreikomponenten-Mischung liegt vorzugsweise im Bereich von -10 °C bis 60 °C, besonders bevorzugt im Bereich von 25 °C bis 60 °C.

Die erfindungsgemäße Druckfarbe ist speziell auf das Stichtiefdruckverfahren abgestimmt.

Beim Stichtiefdruck werden Druckplatten eingesetzt, die in der Oberfläche geätzte bzw. gravierte Vertiefungen aufweisen. In den Vertiefungen befindet sich die Druckfarbe. Die Druckfarbe ist dickflüssig bis pastös und weist überdurchschnittlich hohe Viskositätswerte auf. Beim Druckvorgang sind nur die in die Druckplattenoberfläche eingebrachten Vertiefungen farbführend, während die eigentliche Druckplattenoberfläche farbfrei ist. Dies wird erreicht, indem die Druckplattenoberfläche nach dem Einfärben durch einen Wischzylinder oder ein Rakel von überschüssiger Druckfarbe befreit wird.

Während des eigentlichen Druckvorgangs wird der zu bedruckende Datenträger von einem Andruckzylinder mit elastischer Oberfläche mit hohem Druck gegen die Druckplatte gepresst. Der zumindest teilkompressible Datenträger, üblicherweise aus Papier, wird dabei in die mit Farbe gefüllten Vertiefungen der Druckplatte eingepresst und kommt dadurch mit der Druckfarbe in Berührung. Beim Ablösen des Datenträgers von der Druckplatte zieht dieser die Druckfarbe aus den Vertiefungen heraus. Ein in dieser Art erzeugtes Druckbild weist Bereiche auf, die in Abhängigkeit von der Tiefe der Druckplattengravur mit einer unterschiedlich dicken Farbschicht belegt sind. Aufgrund der hohen Viskosität der Druckfarbe sind sehr hohe Schichtdicken der übertragenen Druckfarbe möglich. Die Druckfarbe liegt erhaben auf dem Papier und vermittelt eine charakteristische Haptik.

Durch den hohen Anpressdruck erfährt das Substratmaterial zusätzlich eine Prägung, die sich auch auf der Rückseite des Datenträgers abzeichnet. Bei ausreichender Tiefe der Gravuren in der Druckplatte erhält ein im Stichtiefdruck bedruckter Datenträger durch Prägung und hohen Farbauftrag ein Druckbild, das ein mit dem Tastsinn wahrnehmbares Relief bildet. In den unbedruckten, nicht mit Farbe belegten Oberflächenbereichen des Datenträgers wirken die hohen Drücke beim Druckvorgang wie eine Kalandrierung, was zu einer Verdichtung und Glättung der Datenträgeroberfläche führt. Durch diese Merkmale sind im Stichtiefdruck erzeugte Drucke jederzeit von Drucken, die mit anderen Techniken erzeugt wurden, unterscheidbar. Neben der mikroverkapselten Dreikomponenten-Mischung umfasst die Druckfarbe ein geeignetes Bindemittel, gegebenenfalls des Weiteren Füllstoffe, Trockner, Firnis und Verdünner.

Die erfindungsgemäße Druckfarbe enthält 25 bis 35 Gew. % mikroverkapselte Dreikomponenten-Mischung.

Vorzugsweise liegt das Gewichtsverhältnis von Dreikomponenten-Mischung zu Bindemittel im Bereich von 1 : 6 bis 2:1. Geeignete Bindemittel sind Kolophoniumharze und Öle.

Als Trockner kann eine Mischung von Mn/Co-Octoaten, als Verdünner hochsiedende Mineralöle und als Firnis verkochte Harze verwendet werden. Als Füllstoffe eignen sich CaCO₃, BaSO₄ und TiO₂.

Zur Herstellung der erfindungsgemäßen Druckfarbe wird die mikroverkapselte Dreikomponenten-Mischung als Pigment direkt oder als wässrige Suspension mit einem geeigneten Bindemittel und gegebenenfalls Zusatzstoffen, wie Füllstoffen, Lösungsmittel, Firnis, Verdünner, Trockner etc., vermengt.

In einer weiteren bevorzugten Ausführungsform umfasst die Druckfarbe zusätzlich ein oder mehrere Buntpigmente und/oder Effektpigmente. Vorzugsweise liegt das Gewichtsverhältnis Buntpigmente zu Dreikomponenten-Mischung im Bereich von 1 : 40 bis 1 :1. Das Gewichtsverhältnis von Effektpigment zu Dreikomponenten-Mischung liegt vorzugsweise im Bereich von 1 : 40 bis 1 : 2.

Sind Bunt- und/oder Effektpigmente in der Druckfarbe vorhanden, können durch Kombination mit dem thermochromen Farbeindruck weitere attraktive Farbeffekte erzielt werden. Beispielsweise kann ein gelbes Buntpigment und eine Dreikomponenten-Mischung, die bei Temperaturerhöhung ihre Farbe von Blau nach farblos wechselt, in der Druckfarbe kombiniert werden. Unterhalb der Umschlagtemperatur nimmt der Betrachter eine grüne Farbe wahr, während er oberhalb der Umschlagtemperatur eine gelbe Farbe wahrnimmt.

Um für das Stichtiefdruckverfahren geeignet zu sein, weist die erfindunggemäße Druckfarbe eine ganz bestimmte Konsistenz auf. Die Druckfarbe ist pastös und weist hohe Viskositätswerte auf. Die Viskosität reicht vorzugsweise von 100 bis 600 Pa.s bei 20°C und einer Scherrate von 4 s⁻¹, besonders bevorzugt von 200 bis 500 Pa.s bei 20°C und einer Scherrate von 4 s⁻¹.

Das mit der erfindungsgemäßen Druckfarbe im Stichtiefdruckverfahren erzeugte Druckbild kann entweder direkt auf dem Datenträger erzeugt oder auf einem separaten Träger vorbereitet werden. Der Datenträger bzw. separate Träger als Substrat, auf dem sich das Druckbild befindet, ist dabei im Bezug auf das verwendete Material in keiner Weise eingeschränkt. Bevorzugt handelt es sich aber um Papier oder Kunststoff, auch in Form von Folien. Bei einem separaten Träger kann es sich beispielsweise um ein selbsttragendes Etikett handeln.

Bei dem bedruckten Datenträger kann es sich beispielsweise um ein Sicherheitspapier, ein Sicherheitsdokument, insbesondere eine Banknote, aber auch um Produktverpackungen handeln. Auch andere Datenträger, die eine sicherheitstechnische Absicherung benötigen, können selbstverständlich mit dem erfindungsgemäßen Sicherheitselement versehen werden.

Oberhalb und/ oder unterhalb des erfindungsgemäßen thermochromen Druckbildes können sich gegebenenfalls weitere Schichten befinden.

In einer vorteilhaften Ausführungsform wird das thermochrome Druckbild mit einer Schicht aus optisch variablem Material und/oder einer Schicht aus thermochromem flüssigkristallinen Material überdruckt.

Das optisch variable Material vermittelt bei unterschiedlichen Betrachtungswinkeln unterschiedliche Farbeindrücke. Man spricht auch vom sogenannten "Farbkippeffekt". Als besonders geeignet haben sich Grün-Blau-oder Kupfer-Grün-Farbübergärtge erwiesen. Vorzugsweise handelt es sich hierbei um flüssigkristalline Materialien. Besonders bevorzugt zeigt dieses Material lichtpolarisierende Eigenschaften. Insbesondere zeigen vernetzte flüssigkristalline Materialien lichtpolarisierende Eigenschaften bei gleichzeitigem Vorliegen eines Farbkippeffektes, ohne thermochrome Effekte aufzuweisen.

Alternativ zum flüssigkristallinen Material mit optisch variablem Effekt können auch Dünnschichtpigmente mit Interferenzeffekten, wie das sogenannte IRIODIN® eingesetzt werden. Bei IRIODIN® handelt es sich um mit Metalloxid beschichtete Glimmerpigmente.

Das thermochrome flüssigkristalline Material sowie das optisch variable Material sind üblicherweise lichtdurchlässig, insbesondere lichtdurchlässige Pigmente, und weisen keine oder nur eine geringe eigene Körperfarbe auf, so dass der visuell erkennbare optische Eindruck dieser Pigmente sehr stark vom Untergrund geprägt wird. Auf einem diffus reflektierenden weißen oder hellen Untergrund treten die Pigmente kaum in Erscheinung, da das diffus reflektierte Streulicht den optisch variablen Effekt überlagert. Auf einem dunklen Untergrund dagegen kommt das Farbspiel dieser Pigmente besonders gut zu Geltung, da dieser die transmittierte Strahlung absorbiert. Besonders schöne optische Effekte ergeben sich daher, wenn das flüssigkristalline thermochrome Material bzw. das optisch variable Material über einem dunklen, vorzugsweise schwarzen Untergrund angeordnet ist. Vorzugsweise wird das thermochrome Druckbild daher so ausgestaltet, dass es einen Farbwechsel von schwarz zu farblos zeigt. Das Druckbild liegt dabei vorzugsweise vollflächig vor, kann aber auch in Form von Mustern und/ oder Zeichen vorliegen.

Das erfindungsgemäße Druckbild zeichnet sich durch den leicht erkennbaren thermochromen Effekt aus, der durch die mittels Stichtiefdruck erzeugte Haptik zusätzlich gegen Nachahmung, insbesondere Kopieren, abgesichert ist. Bei Einsatz der erfindungsgemäßen Druckfarbe ist es möglich, auf den bisher für thermochrome Farben notwendigen Siebdruck zu verzichten und in einem Druckvorgang thermochrome Effekte sowie die für Stichtiefdruck typischen Verprägungen des Substrats zu erzielen. Des Weiteren können mittels Stichtiefdruck sehr feine Linienstrukturen bzw. Mikroschriften realisiert werden, die im Siebdruck so nicht möglich sind. Die Reduzierung der Bearbeitungszeit und Einsparung von weiteren Druckvorrichtungen führt gleichzeitig zu einer deutlichen Kostenreduzierung.

### Illustrierendes Beispiel 1 (nicht Teil der Erfindung)

Ausgangssubstanz ist die mikroverkapselte Dreikomponenten-Mischung Matsui 25 Fast Black. Hierbei handelt es sich um eine Aufschlämmung von 70 Gew. % Pigment in 30 Gew% Wasser. Diese wird eingeengt, so dass das Pigment vorliegt. 23 Gew. % des getrockneten Pigments werden mit 62,5 Gew. % Transparentweiß (Bindemittel mit Füllstoff, Nr. 9 SL 0700 Fa. SICPA) angerieben. Diese Mischung wurde des Weiteren mit 2,3 Gew. % einer Mn/Co-Octoat Mischung (Trockner, Nr. 870950, Fa. SICPA), mit 9,3 Gew. % HT-Varnisch (Firnis, Nr. 850090, Fa. SICPA) und mit 2,9 Gew. % hochsiedenden Mineralölen (Verdünner, Nr. 859041, Fa. SICPA) vermengt.

Der Andruck erfolgte an einer Mini-Orlof auf Baumwollpapier.

### Ausführungsbeispiel 2

32,5 Gew.% der mikroverkapselten Dreikomponenten-Mischung Matsui 25 Fast Black werden mit folgenden Komponenten vermengt: 39,2 Gew.% Transparentweiß (Bindemittel mit Füllstoff, Nr. 9 SL 0700 Fa. SICPA), 2,3 Gew. % einer Mn/ Co-Octoat Mischung (Trockner, Nr. 870950, Fa. SICPA), 23,2 Gew. % HT-Varnisch (Firnis, Nr. 850090, Fa. SICPA), 2,8 Gew. % hochsiedende Mineralöle (Verdünner, Nr. 859041, Fa. SICPA).

Der Andruck erfolgte an einer Mini-Orlof auf Baumwollpapier.

Weitere Vorteile und Ausführungsformen der Erfindung werden anhand der Figuren näher erläutert. Die in den Figuren gezeigten Proportionen entsprechen nicht unbedingt den in der Realität vorliegenden Verhältnissen und dienen vornehmlich zur Verbesserung der Anschaulichkeit.

### Es zeigen:

- Fig. 1: ein Sicherheitsdokument mit einem erfindungsgemäßen Druckbild,
- Fig. 2, 3: verschiedene Ausführungsformen des Sicherheitsdokuments im Querschnitt.

Die Erfindung wird aus Gründen der Übersichtlichkeit am Beispiel einer Banknote näher erläutert.

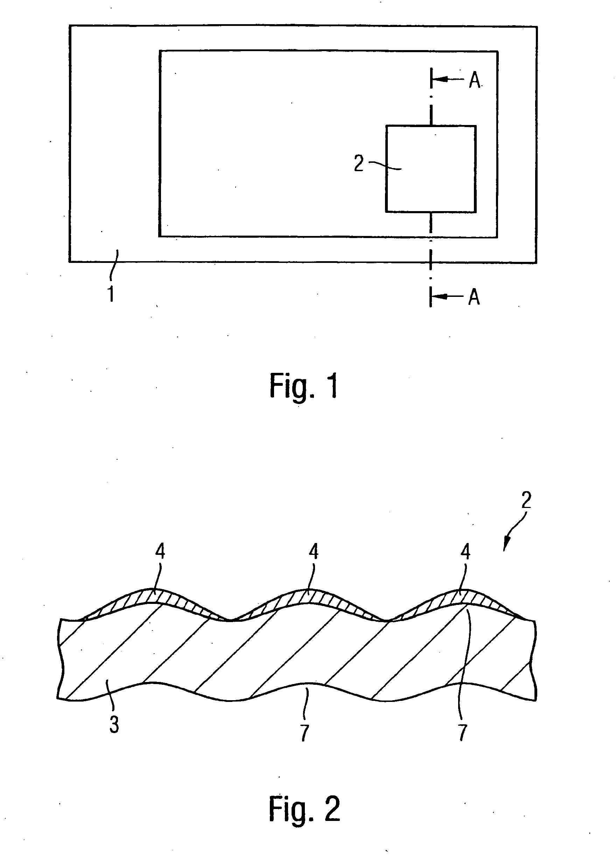

Fig. 1 zeigt eine derartige Banknote 1 aus Papier oder Kunststoff mit einem thermochromen im Stichtiefdruckverfahren erzeugten Druckbild 2 aus erfindungsgemäßer Druckfarbe auf der Vorderseite der Banknote in Form eines Quadrates. Die Banknote 1 kann selbstverständlich weitere Sicherheitsmerkmale, wie Wasserzeichen, Sicherheitsfaden oder lumineszierende oder magnetische Aufdrucke oder Ähnliches, aufweisen.

Das thermochrome Druckbild 2 kann auch weitere Schichten aufweisen, die allein oder in Kombination mit anderen Schichten des Druckbildes weitere auffällige optische oder maschinenlesbare Effekte erzeugen.

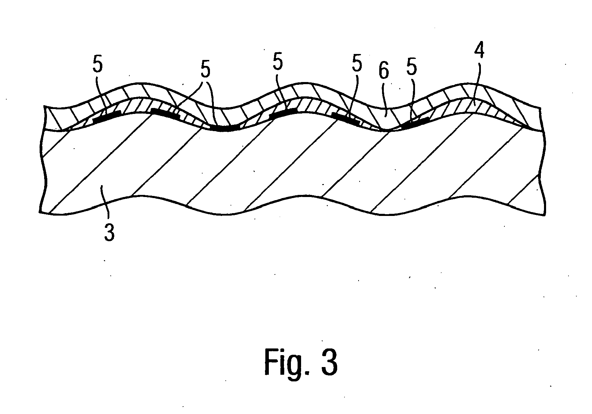

Einige bevorzugte Ausführungsförmen werden anhand der Fig. 2 und 3 näher erläutert, welche die Banknote 1 im Querschnitt entlang der strichpunktierten Linie A - A zeigen, um den Schichtaufbau des Druckbildes 2 zu verdeutlichen.

Gemäß Fig. 2 wird das Papier- oder Kunststoffsubstrat 3 der Banknote 1 mit einem Druckbild im Stichtiefdruckverfahren unter Einsatz der erfindungsgemäßen Druckfarbe 4 versehen. Die Schichtdicke der Druckfarbe 4 liegt vorzugsweise im Bereich von 6 bis 20 µm. Der Stichtiefdruck kann vollflächig oder in Form von Zeichen oder Mustern erfolgen. Durch das Verpressen des Substrates während des Druckvorganges wird dieses verprägt und zeigt für den Stichtiefdruck charakteristische Verprägungen 7. Die thermochrome Druckfarbe zeigt bei ca. 25 °C (Umschlagstemperatur) einen Farbumschlag von schwarz nach farblos. Vorzugsweise ist das erfindungsgemäße Druckbild vollflächig oder zeichnet sich durch sehr feine Linien aus. Geeignete Druckplatten zur Erzeugung vollflächiger im Stichtiefdruckverfahren erzeugter Druckbilder sind in der EP 1117 537 B1 und in der EP 1119 457 B1 beschrieben.

Fig. 3 zeigt einen Schichtaufbau, bei dem das erfindungsgemäße Druckbild mit weiteren Schichten kombiniert wird. Das Substrat 3 wird in einem ersten Schritt mit einem Offsetaufdruck 5 in Form von Mustern und/oder Zeichen versehen. Die Schichtdicke des Offsetaufdruckes liegt vorzugsweise im Bereich von 0,8 bis 1,5 µm. Der Aufdruck kann ein- oder auch mehrfarbig gestaltet werden, vorzugsweise jedoch schwarz. Die Farbschicht 4 ist eine im Stichtiefdruck aufgebrachte erfindungsgemäße Druckfarbe, die bei Umgebungstemperatur eine dunkle Farbe, vorzugsweise Schwarz, aufweist und überhalb der Umschlagstemperatur farblos wird. Die Schicht wird vollflächig aufgedruckt. Vorzugsweise weist diese Schicht eine Dicke im Bereich von 6 bis 20 µm auf. Selbstverständlich ist es auch möglich eine Mischung aus erfindungsgemäßen Druckfarben mit verschiedenen Übergangstemperaturen einzusetzen oder verschiedene Druckfarben in unterschiedlichen Bereichen aufzubringen. Denkbar ist beispielsweise, die im Stichtiefdruck übliche Farbschnitttechnik einzusetzen.

Über dieser Schicht 4 wird im Siebdruckverfahren eine Druckschicht 6 erzeugt, die flüssigkristallines optisch variables Material umfasst. Die Schichtdicke dieser Siebdruckschicht liegt vorzugsweise im Bereich von 8 bis 20 µm.

Liegt die Umgebungstemperatur unterhalb der Umschlagstemperatur der thermochromen Druckfarbe, erscheint das Druckbild 2 dem Betrachter als brillante Schicht mit einem Farbwechselspiel. Der Farbkippeffekt ist auf das flüssigkristalline optisch variable Material zurückzuführen, für das die schwarze Druckfarbe als vollflächiger Untergrund dient.

Bei Erhöhung der Umgebungstemperatur über die Umschlagstemperatur hinaus wird die Druckfarbe farblos und transparent oder zumindest transluzent, so dass die unterste informationsführende Schicht 5 sichtbar wird. Der Betrachter erkennt die dort eingebrachte Information.

Besonders bevorzugt sind Ausführungsformen, in denen der Offsetaufdruck 5 ebenfalls thermochrom ausgestaltet ist. Bei geeigneter Wahl der Umschlagstemperaturen des Aufdruckes 5 und des Stichtiefdruckes 4 kann eine thermochrome Kaskade eingestellt werden. In diesem Fall liegt vorteilhafterweise die Umschlagstemperatur des Offsetaufdrucks bei ca. 35°C, während die Umschlagstemperatur des Stichtiefdruckes bei ca. 25°C liegt.

In weiteren Ausführungsformen ist es ebenso möglich, dass das thermochrome Druckbild 2 und/oder wenigstens eine der weiteren Schichten weitere visuell und/oder maschinell prüfbare Eigenschaften, wie elektrische Leitfähigkeit, Magnetismus, Lumineszenz oder Ähnliches, aufweisen. Um dem jeweiligen Druckbild elektrisch leitfähige Eigenschaften zu verleihen, genügt es beispielsweise, den verwendeten Druckfarben eine ausreichende Menge an Rußpigmenten zuzusetzen. Da insbesondere der Untergrund eine dunkle, vorzugsweise schwarze Eigenfarbe aufweisen soll, kann dieser auf sehr einfache Weise mit magnetischen Eigenschaften ausgestattet werden, indem statt Farbpigmenten dunkle magnetische Pigmente verwendet werden.

Bei bestimmten Ausführungsformen, die im Gebrauch einer starken mechanischen oder chemischen Belastung ausgesetzt sind, bietet es sich an, den Aufdruck mit einer Schutzschicht abzudecken. Bei der Schutzschicht kann es sich um eine über das Sicherheitselement laminierte Folie oder eine Schutzlackschicht handeln. Die Schutzlackschicht kann dabei vollflächig oder in Teilflächen aufgebracht werden. Beim Lacksystem können z.B. UV-Lacke, Hybridlacke, Öldrucklacke oder Dispersionslacke vom Ein- bzw. Zweikomponententyp eingesetzt werden. Die Schutzlackschicht wird vorzugsweise aufgedruckt, z.B. mittels Flexodruck oder Offsetdruck.

## Patentansprüche

1. Thermochrome Druckfarbe für den Stichtiefdruck, **dadurch gekennzeichnet, dass** sie 25 Gew. % bis 35 Gew. % mikroverkapselte Dreikomponenten-Mischung aus einem Elektronendonor, einem Elektronenakzeptor und einem Lösungsmittel umfasst.

2. Druckfarbe nach Anspruch 1, **dadurch gekennzeichnet, dass** die Druckfarbe eine reversible Farbänderung zeigt.

3. Druckfarbe nach Anspruch 1 oder 2, **dadurch gekennzeichnet, dass** der Elektronendonor ein organischer Farbstoff, bevorzugt ein Leukofarbstoff ist.

4. Druckfarbe nach Anspruch 3, **dadurch gekennzeichnet, dass** der Leukofarbstoff ausgewählt ist aus der Gruppe Spirolacton, Fluoran, Spiropyran und Fulgid.

5. Druckfarbe nach wenigstens einem der Ansprüche 1 bis 4, **dadurch gekennzeichnet, dass** der Elektronenakzeptor eine schwache Säure ist.

6. Druckfarbe nach Anspruch 5, **dadurch gekennzeichnet, dass** die schwache Säure ausgewählt ist aus der Gruppe Bisphenol A, Alkyl-p-hydroxybenzoat und 1,2,3-Triazol, 4-Hydroxycoumarin.

7. Druckfarbe nach wenigstens einem der Ansprüche 1 bis 6, **dadurch gekennzeichnet, dass** das Lösungsmittel ein polares Lösungsmittel ist, vorzugsweise ausgewählt ist aus der Gruppe Alkohol, Keton, Ester und Ether.

8. Druckfarbe nach wenigstens einem der Ansprüche 1 bis 7, **dadurch gekennzeichnet, dass** sie unterhalb einer Umschlagstemperatur farbig und oberhalb dieser Temperatur farblos ist.

9. Druckfarbe nach wenigstens einem der Ansprüche 1 bis 8, **dadurch gekennzeichnet, dass** die Umschlagstemperatur im Bereich von -10 °C bis +60 °C liegt.

10. Druckfarbe nach wenigstens einem der Ansprüche 1 bis 9, **dadurch gekennzeichnet, dass** sie wenigstens ein Buntpigment umfasst.

11. Druckfarbe nach wenigstens einem der Ansprüche 1 bis 10, **dadurch gekennzeichnet, dass** das Gewichtsverhältnis von Dreikomponenten- Mischung zu Bindemittel im Bereich von 1 : 6 bis 2 :1 liegt.

12. Druckfarbe nach wenigstens einem der Ansprüche 1 bis 11, **dadurch gekennzeichnet, dass** sie pastös ist.

13. Druckfarbe nach wenigstens einem der Ansprüche 1 bis 12, **dadurch gekennzeichnet, dass** sie eine Viskosität von 100 bis 600 Pa.s bei 20 °C und eine Scherrate von 4 s⁻¹ aufweist.

14. Datenträger mit einem Druckbild, **dadurch gekennzeichnet, dass** es ein im Stichtiefdruckverfahren und unter Verwendung der Druckfarbe nach wenigstens einem der Ansprüche 1 bis 13 erzeugtes Druckbild ist.

15. Datenträger nach Anspruch 14, **dadurch gekennzeichnet, dass** unter dem Druckbild ein zumindest teilweise dunkler, vorzugsweise schwarzer Untergrund vorliegt.

16. Datenträger nach Anspruch 14 oder 15, **dadurch gekennzeichnet, dass** über dem Druckbild eine Schicht aus thermochromen flüssigkristallinen Material oder aus optisch variablem Material vorliegt.

17. Datenträger nach wenigstens einem der Ansprüche 14 bis 16, **dadurch gekennzeichnet, dass** das optisch variable Material flüssigkristallin ist.

18. Datenträger nach wenigstens einem der Ansprüche 14 bis 17, **dadurch gekennzeichnet, dass** der Datenträger ein Sicherheitspapier, ein Sicherheitsdokument oder eine Produktverpackung ist.

19. Verfahren zur Herstellung eines Datenträgers, **dadurch gekennzeichnet, dass**
- ein Substrat zur Verfügung gestellt wird,
- das Substrat mittels Stichtiefdruckverfahren unter Verwendung der Druckfarbe nach wenigstens einem der Ansprüche 1 bis 13 bedruckt wird.

20. Verfahren zur Herstellung einer Druckfarbe, **dadurch gekennzeichnet, dass** 25 Gew. % bis 35 Gew. % einer mikroverkapselten Dreikomponenten-Mischung aus einem Elektronendonor, einem Elektronenakzeptor und einem Lösungsmittel als Pigment oder als wässrige Suspension einem Bindemittel beigemengt wird.

21. Verwendung der Druckfarbe nach wenigstens einem der Ansprüche 1 bis 13 als Druckfarbe im Stichtiefdruckverfahren.

## Claims

1. A thermochromic printing ink for intaglio printing, **characterized in that** it comprises 25 wt% to 35 wt% microencapsulated three-component mixture composed of one electron donor, one electron acceptor and one solvent.

2. The printing ink according to claim 1, **characterized in that** the printing ink displays a reversible color change.

3. The printing ink according to claim 1 or 2, **characterized in that** the electron donor is an organic pigment, preferably a leuco dye.

4. The printing ink according to claim 3, **characterized in that** the leuco dye is selected from the group spirolactone, fluoran, spiropyran and fulgide.

5. The printing ink according to at least one of claims 1 to 4, **characterized in that** the electron acceptor is a weak acid.

6. The printing ink according to claim 5, **characterized in that** the weak acid is selected from the group bisphenol A, alkyl p-hydroxybenzoate and 1,2,3-triazole, 4-hydroxy coumarin.

7. The printing ink according to at least one of claims 1 to 6, **characterized in that** the solvent is a polar solvent, preferably is selected from the group alcohol, ketone, ester and ether.

8. The printing ink according to at least one of claims 1 to 7, **characterized in that** it is colored below a transition temperature and colorless above this temperature.

9. The printing ink according to at least one of claims 1 to 8, **characterized in that** the transition temperature is in the range of -10°C to +60°C.

10. The printing ink according to at least one of claims 1 to 9, **characterized in that** it comprises at least one colored pigment.

11. The printing ink according to at least one of claims 1 to 10, **characterized in that** the weight ratio of three-component mixture to binder is in the range of 1 : 6 to 2 :1.

12. The printing ink according to at least one of claims 1 to 11, **characterized in that** it is paste-like.

13. The printing ink according to at least one of claims 1 to 12, **characterized in that** it exhibits a viscosity of 100 to 600 Pa·s at 20°C and a shear rate of 4 s⁻¹.

14. A data carrier having a print image, **characterized in that** it is a print image produced in the intaglio printing method and using the printing ink according to at least one of claims 1 to 13.

15. The data carrier according to claim 14, **characterized in that**, under the print image, an at least partially dark, preferably black background is present.

16. The data carrier according to claim 14 or 15, **characterized in that**, over the print image, a layer composed of thermochromic liquid crystalline material or of optically variable material is present.

17. The data carrier according to at least one of claims 14 to 16, **characterized in that** the optically variable material is liquid crystalline.

18. The data carrier according to at least one of claims 14 to 17, **characterized in that** the data carrier is a security paper, a security document or a product packaging.

19. A method for manufacturing a data carrier, **characterized in that**
- a substrate is provided,
- the substrate is printed on by means of intaglio printing methods using the printing ink according to at least one of claims 1 to 13.

20. A method for manufacturing a printing ink, **characterized in that** 25 wt% to 35 wt% microencapsulated three-component mixture composed of one electron donor, one electron acceptor and one solvent is admixed with a binder as a pigment or as an aqueous suspension.

21. A use of the printing ink according to at least one of claims 1 to 13 as a printing ink in the intaglio printing method.

## Revendications

1. Encre d'imprimerie thermochromique pour impression en taille-douce, **caractérisée en ce qu'**elle comprend 25 à 35 % en poids d'un mélange tricomposant micro-encapsulé d'un donneur d'électrons, d'un accepteur d'électrons et d'un solvant.

2. Encre d'imprimerie selon la revendication 1, **caractérisée en ce que** l'encre d'imprimerie présente un changement réversible de couleur.

3. Encre d'imprimerie selon la revendication 1 ou 2, **caractérisée en ce que** le donneur d'électrons est un colorant organique, de préférence un colorant leucodérivé.

4. Encre d'imprimerie selon la revendication 3, **caractérisée en ce que** le colorant leucodérivé est choisi dans le groupe consistant en les spirolactones, les fluorannes, les spiropyrannes et le fulgides.

5. Encre d'imprimerie selon au moins l'une des revendications 1 à 4, **caractérisée en ce que** l'accepteur d'électrons est un acide faible.

6. Encre d'imprimerie selon la revendication 5, **caractérisée en ce que** l'acide faible est choisi dans le groupe consistant en le bisphénol A, les p-hydroxy-benzoates d'alkyle et le 1,2,3-triazole, la 4-hydroxy-coumarine.

7. Encre d'imprimerie selon au moins l'une des revendications 1 à 6, **caractérisée en ce que** le solvant est un solvant polaire choisi de préférence dans le groupe consistant en les alcools, les cétones, les esters et les éthers.

8. Encre d'imprimerie selon au moins l'une des revendications 1 à 7, **caractérisée en ce qu'**elle est colorée en dessous d'une température d'activation et incolore au-delà de cette température.

9. Encre d'imprimerie selon au moins l'une des revendications 1 à 8, **caractérisée en ce que** la température d'activation est comprise dans la plage de -10°C à +60°C.

10. Encre d'imprimerie selon au moins l'une des revendications 1 à 9, **caractérisée en ce qu'**elle comprend au moins un pigment coloré.

11. Encre d'imprimerie selon au moins l'une des revendications 1 à 10, **caractérisée en ce que** le rapport en poids du mélange tricomposant au liant est compris dans la plage de 1:6 à 2:1.

12. Encre d'imprimerie selon au moins l'une des revendications 1 à 11, **caractérisée en ce qu'**elle est pâteuse.

13. Encre d'imprimerie selon au moins l'une des revendications 1 à 12, **caractérisée en ce qu'**elle présente une viscosité de 100 à 600 Pa.s à 20°C et une vitesse de cisaillement de 4 s⁻¹.

14. Support de données comportant une image imprimante, **caractérisé en ce qu'**il s'agit d'une image imprimante produite par un procédé d'impression en taille-douce et par utilisation de l'encre d'imprimerie selon au moins l'une des revendications 1 à 13.

15. Support de données selon la revendication 14, **caractérisé en ce qu'**un fond au moins partiellement foncé, de préférence noir, est présent en dessous de l'image imprimante.

16. Support de données selon la revendication 14 ou 15, **caractérisé en ce qu'**une couche d'un matériau cristal liquide thermochromique ou d'un matériau optiquement variable est présente au-dessus de l'image imprimante.

17. Support de données selon au moins l'une des revendications 14 à 16, **caractérisé en ce que** le matériau optiquement variable est cristallin liquide.

18. Support de données selon au moins l'une des revendications 14 à 17, **caractérisé en ce que** le support de données est un papier de sécurité, un document de sécurité ou un emballage de produits.

19. Procédé de fabrication d'un support de données, **caractérisé en ce que**
- un substrat est mis à disposition,
- le substrat est imprimé par un procédé d'impression en taille-douce par utilisation de l'encre d'imprimerie selon au moins l'une des revendications 1 à 13.

20. Procédé de fabrication d'une encre d'imprimerie, **caractérisé en ce qu'**on mélange à un liant 25 à 35 % en poids d'un mélange tricomposant micro-encapsulé constitué d'un donneur d'électrons, d'un accepteur d'électrons et d'un solvant, sous forme d'un pigment ou d'une suspension aqueuse.

21. Utilisation de l'encre d'imprimerie selon au moins l'une des revendications 1 à 13 en tant qu'encre d'imprimerie dans un procédé d'impression en taille-douce.
